# EUROPÄISCHE PATENTSCHRIFT

(11) **EP 0 298 221 B1**
(45) Veröffentlichungstag und Bekanntmachung des Hinweises auf die Patenterteilung: **30.03.1994**
(21) Anmeldenummer: 88107487.6
(22) Anmeldetag: 10.05.1988
(51) Int. Cl.: B27C 5/10, B27F 1/04

(54) **Vorrichtung zum Fräsen von Nuten oder Schattenfugen**
Apparatus for milling grooves
Dispositif pour fraiser des rainures

(30) Priorität: 10.07.1987 DE 3722818
(43) Veröffentlichungstag der Anmeldung: 11.01.1989
(73) Patentinhaber: wolfcraft GmbH, D-56745 Weibern (DE)
(72) Erfinder: Wolff, Robert, D-5446 Engeln (DE)
(74) Vertreter: Peerbooms, Rudolf, Dipl.-Phys.

(56) Entgegenhaltungen:
- DE-U- 8 118 483
- FR-A- 1 263 442
- GB-A- 1 367 242
- GB-A- 1 543 066

## Beschreibung

Die Erfindung betrifft eine Vorrichtung zum Fräsen von Nuten oder Schattenfugen, mit einem eine Grundplatte und eine Stirnplatte aufweisenden Anschlagwinkel und mit einem Schlitten, der auf am Anschlagwinkel vorgesehenen Führungen parallel zur Grundplatte gegen die Kraft von Rückstellfedern in Richtung auf die Stirnplatte verschiebbar ist, wobei der Schlitten als Träger für einen, ein Winkelgetriebe aufweisenden Antriebsmotor und für eine Frässcheibe ausgebildet ist, welcher eine schlitzförmige Durchtrittsöffnung in der Stirnplatte zugeordnet ist.

Bei einer derartigen, durch das DE-GM 81 18 483 bekannten Fräsvorrichtung ist der Schlitten mittels ihn durchsetzender Schrauben unmittelbar an das Gehäuse des Antriebsmotors angeschraubt, was ein entsprechendes Anschraub-Lochbild am Motorgehäuse voraussetzt, weshalb die dortige Vorrichtung in der Regel als Gesamtheit erworben werden muß und entsprechend teuer ist.

Bei Heimwerkern sind dagegen handgeführte Winkelschleifer weit verbreitet, an deren Antriebskopf zwei seitliche, sich gegenüberliegende Gewindebohrungen zum Anschrauben von Handgriffen vorgesehen sind. Diese Winkelschleifer sind bisher fast nur für Schleif- oder Polierarbeiten einsetzbar.

Der Erfindung liegt die Aufgabe zugrunde, handelsübliche Winkelschleifer für den Aufbau der gattungsgemäßen Fräsvorrichtung nutzbar zu machen, wobei die Fräsvorrichtung an die unterschiedlichen Abmessungen und Bauformen der verschiedenen Winkelschleifer-Fabrikate anpaßbar und zugleich die Handhabung bei der Montage und beim Ausführen von Fräsarbeiten einfach sein sollen.

Zur Lösung dieser Aufgabe ist erfindungsgemäß vorgesehen, daß die Fräsvorrichtung als ein gegen die angeschraubten Führungshandgriffe und das Schleifwerkzeug eines handgeführten Winkelschleifers austauschbares Vorsatzgerät ausgebildet ist, daß der Schlitten zwei mehrgliedrige Befestigungswinkel aufweist, zwischen denen der Winkelschleifer mittels in die Einschraublöcher für die Führungshandgriffe eingreifenden Befestigungsschrauben festspannbar ist, und daß im Schlitten eine Kupplungswelle gelagert ist, in deren oberes, eine Gewindebohrung aufweisendes Ende der Abtriebs-Gewindezapfen des Winkelschleifers und an deren unteres Ende die Frässcheibe anschraubbar sind.

Durch die Erfindung ist ein Vorsatzgerät erreicht, mit welchem ein handelsüblicher Winkelschleifer mit wenigen Handgriffen in eine Vorrichtung zum Fräsen von Nuten, z.B. von bogenförmigen Nuten von Lamellendübel, oder auch zum Schattenfugenfräsen umgerüstet werden kann, so daß die Besitzer von handelsüblichen Winkelschleifern nur noch ein verhältnismäßig preiswertes Zusatzgerät erwerben müssen. Nach Abnahme der Handgriffe und des Schleifwerkzeuges wird der Winkelschleifer mit seinem Abtriebs-Gewindezapfen in die Kupplungswelle des Vorsatzgerätes eingeschraubt, wobei die Position des Winkelschleifers bereits vorfixiert ist. Mittels der mehrgliedrigen Befestigungswinkel wird der Winkelschleifer fest mit dem Schlitten des Vorsatzgerätes verschraubt, wobei die Befestigungswinkel derart verschiebbar und schwenkbar ausgebildet sind, daß an eine Anpassung an die jeweilige Höhenlage, den Breitenabstand und die Achsrichtungen der am Kopf des Winkelschleifers vorgesehenen Handgriff-Gewindebohrungen vorgenommen werden kann. In gleich einfacher Weise ist der Winkelschleifer wieder vom Vorsatzgerät demontierbar, wenn er wieder zur Ausführung von Schleif- oder Polierarbeiten verwendet werden soll. Bei einer solchen Umrüstung kann der Winkelschleifer unverändert an der Kuoplungswelle des Vorsatzgerätes festgespannt bleiben, so daß die Umrüstarbeiten auf wenige Handgriffe beschränkt bleiben.

Gemäß einer besonders zweckmäßigen Weiterbildung der Erfindung kann vorgesehen werden, daß die Grundplatte an der der Stirnplatte abgewandten Seite einen Rückensteg aufweist, daß der Schlitten auf Führungsstangen geführt ist, die im Rückensteg und in der Stirnplatte abgestützt sind, daß die Grundplatte eine bis in die Stirnplatte reichende Längsausnehmung zur Aufnahme der Kupplungswelle aufweist und daß der Anschlagwinkel angrenzend an die Längsausnehmung in zwei aneinander steckbare Bauteile unterteilt ist, von denen zumindest das die Stirnplatte umfassende Bauteil betriebsmäßig von den Führungsstangen abziehbar ist. Durch diese Maßnahmen wird einerseits eine exakte, nicht schmutzanfällige Führung für den Schlitten erreicht und zum anderen ein Auswechseln der Frässcheibe sehr vereinfacht, da nunmehr der die Frässcheibe in einer Schutzkammer beherbergende Anschlagwinkel derart auseinandergenommen werden kann, daß die Befestigungsstelle für die Frässcheibe frei zugänglich ist. Der die Kupplungswelle tragende Schlitten verbleibt bei einem Wechsel der Frässcheibe an dem die Stirnplatte umfassenden Bauteil des Anschlagwinkels, so daß auch ein Wechsel der Frässcheibe mit wenigen Handgriffen durchführbar ist.

Weitere Merkmale der Erfindung sind in den Unteransprüchen angegeben.

Der Gegenstand der Erfindung wird im folgenden anhand eines in der Zeichnung dargestellten Ausführungsbeispieles näher beschrieben, wobei zeigen:
- Fig. 1: eine Draufsicht auf die Fräsvorrichtung nach der Erfindung,
- Fig. 2: eine Seitenansicht auf die Fräsvorrichtung nach Fig. 1, wobei zugleich ein angeschraubter Winkelschleifer angedeutet ist; in Fig. 2 sind ferner Teilschnitte gemäß den Linien IIa-IIa, IIb-IIb und IIc-IIc nach Fig. 1 gezeigt,
- Fig. 3: einen Schnitt gemäß der Linie III-III in Fig. 1,
- Fig. 4: eine Rückansicht der Fräsvorrichtung nach Fig. 1 und

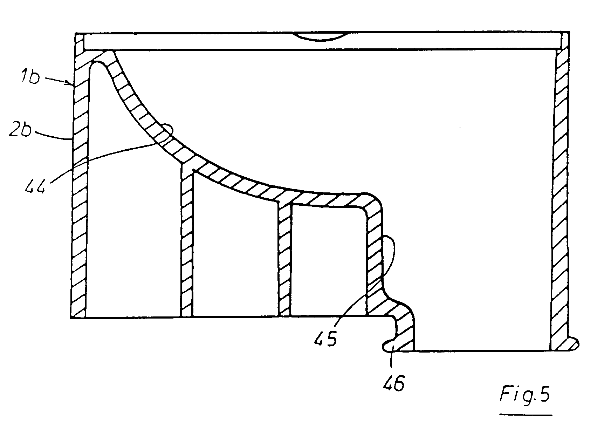

- Fig. 5: einen Teilschnitt gemäß der Linie V-V in Fig. 4.

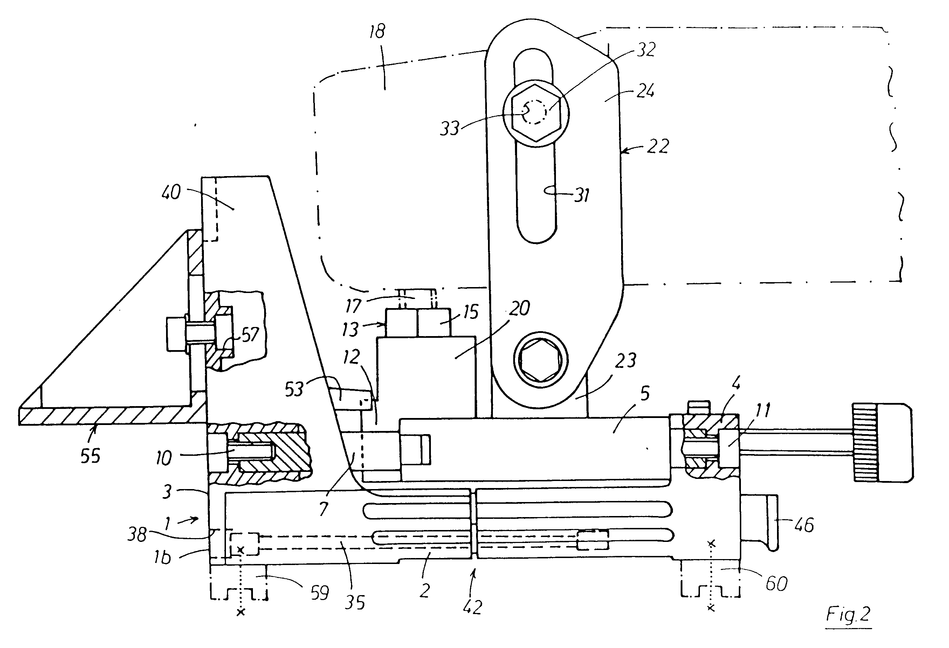

Die Fräsvorrichtung besteht in ihrem grundsätzlichen Aufbau aus einem Anschlagwinkel 1, der eine Grundplatte 2, eine vordere Stirnplatte 3 und einen Rückensteg 4 umfaßt, und aus einem plattenförmigen Schlitten 5, der auf zwei Führungsstangen 6, 7 parallel zur Grundplatte 2 in Richtung auf die Stirnplatte 3 gegen die Kraft von zwei Rückstellfedern 8, 9 verschiebbar ist. In der gezeigten Stellung liegt der Schlitten 5 am Rückensteg 4 an. Die Führungsstangen 6, 7 sind in der Stirnplatte 3 und dem Rückensteg 4 gelagert und dort mittels versenkter, in stirnseitige Gewindebohrungen der Führungsstangen 6, 7 eingreifender Kopfschrauben 10, 11 (vgl. Fig. 2) lösbar festgespannt Die vordere Stirnplatte 3 ist durch rückwärtige Rippen 40, 41 versteift und mittig mit einem Fenster 3a versehen.

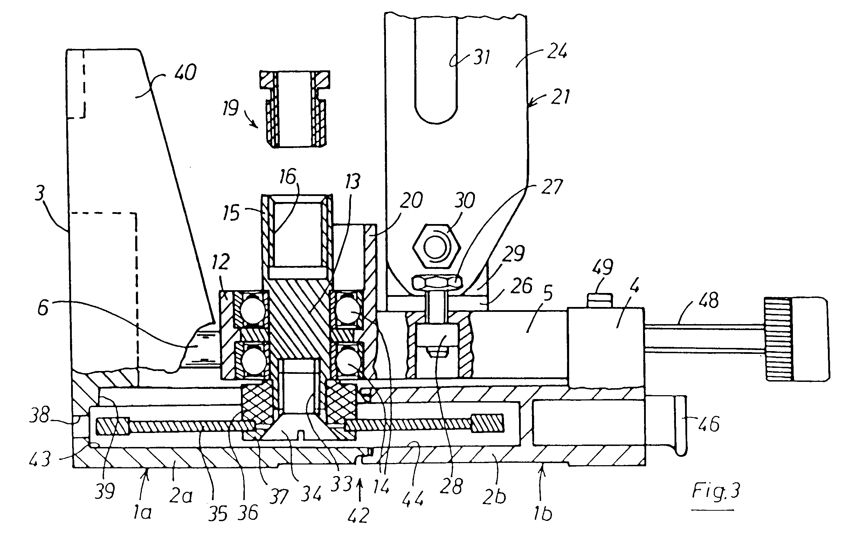

An das vordere Ende des Schlittens 5 ist eine rechtwinklig zur Verschiebeebene gerichtete Hülse 12 angeformt (vgl. Fig. 3), in welcher eine Kupplungswelle 13 über zwei Kugellagerringe 14 drehbar gelagert ist. An einem oberhalb des Schlittens 5 liegenden Endabschnitt 15 ist die Kupplungswelle 13 mit einer Gewindebohrung 16 versehen, in die der Abtriebs-Gewindezapfen 17 eines handelsüblichen Winkelschleifers 18 einschraubbar ist. Der Kupplungswelle 13 ist eine in die Gewindebohrung 16 einschraubbare Reduzierbuchse 19 zugeordnet, die eine Anpassung an Winkelschleifer-Abtriebszapfen 17 erlaubt, die einen entsprechend geringeren Durchmesser aufweisen. Der vorstehende Endabschnitt 15 der Kupplungswelle 13 weist ein Sechskant-Außenprofil zum Ansetzen eines Schraubenschlüssels auf und er ist auf dem größten Teil seiner Länge und seines Umfanges von einem Schutzring 20 umschlossen, der aus einer axialen Verlängerung der Hülse 12 besteht.

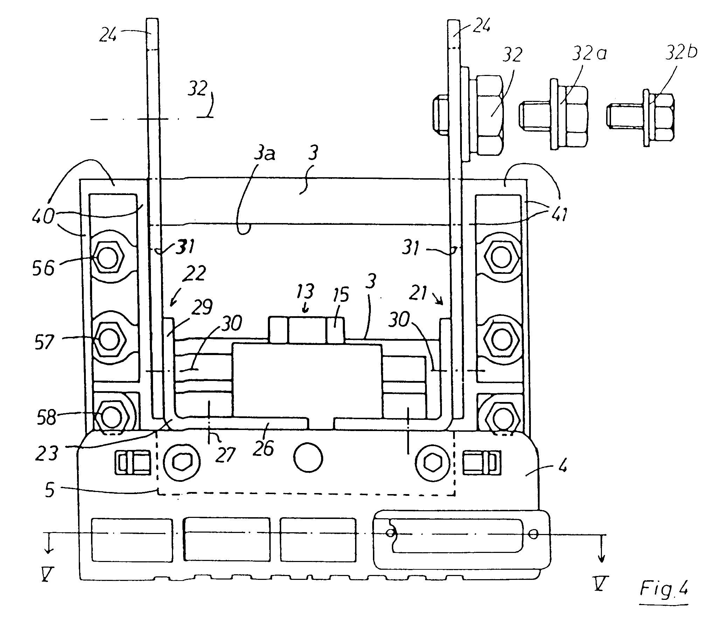

Der Schlitten 5 trägt an seiner Oberseite ferner zwei mehrgliedrige Befestigungswinkel 21, 22, die jeweils aus einem unteren Winkelteil 23 und einer Lasche 24 bestehen. Der untere Winkelteil 23 ist mit seinem bodenseitigen, ein Langloch 25 aufweisenden Schenkel 26 mittels einer Schraube 27 festschraubbar, die in eine am Schlitten 5 verdrehungsfest angeordnete Mutter 28 eingreift, vgl. Fig. 3. Die Lasche 24 ist am oberen Schenkel 29 mittels einer Schraube 30 festgeschraubt. Im oberen Bereich weist die Lasche 24 ein Langloch 31 auf, das zur Aufnahme einer Befestigungsschraube 32 dient, die in eine Gewindebohrung 33 am Kopf des Winkelschleifers 18 eingeschraubt wird. Die Langlöcher 25 der Winkelteile 23 erlauben eine Anpassung an die Breite des Kopfes des Winkelschleifers 28 und die Langlöcher 31 in den Laschen erlauben eine höhenmäßige Anpassung. Die Winkelteile 23 sind ferner um ihre Befestigungsschrauben 27 und die Laschen 24 um ihre untere Befestigungsschraube 30 schwenkeinstellbar, so daß die Fräsvorrichtung auch an Winkelschleifer angeschraubt werden kann, deren Handgriff-Gewindebohrungen 33 schräg zur Längsachse des Winkelschleifers 18 gerichtet sind. Der Fräsvorrichtung sind mehrere Schrauben 32, 32a, 32b unterschiedlichen Durchmessers zugeordnet, (vgl. Fig. 4), um unterschiedliche Durchmesser bei den Handgriff-Gewindebohrungen 33 zu berücksichtigen.

An das untere Ende der Kupplungswelle 13 ist mittels einer in eine untere Gewindebohrung 33 eingreifenden Schraube 34 eine Frässcheibe 35 zwischen einem Aufnahmering 36 und einer Einspannscheibe 37 festgespannt. Die Frässcheibe 35 ist auf eine schlitzförmige Durchtrittsöffnung 38 in der Stirnplatte 3 ausgerichtet.

Die Grundplatte 2 ist mit einer bis in die Stirnplatte 3 reichenden Längsausnehmung 39 versehen, die bei einem Vorschub des Schlittens 5 die Kupplungswelle 13 bzw. den Aufnahmering 36 aufnimmt.

Der Anschlagwinkel 1 ist im Bereich seiner Grundplatte 2 an einer am hinteren Ende der Längsausnehmung 39 liegenden Stelle 42 in zwei aneinander steckbare Bauteile 1a, 1b unterteilt, wobei die Grundplattenhälften 2a, 2b jeweils eine Aufnahmetasche 43, 44 für die Frässcheibe 35 aufweisen. Die hintere Aufnahmetasche 44 geht in einen Späneauswurfkanal 45 über, der in einem rückwärtigen Anklemmflansch 46 mündet, an den ein Späneauffangbeutel 47 befestigbar ist.

Wenn die Frässcheibe 35 ausgewechselt werden soll, werden die Schrauben 10 von den Führungsstangen 6, 7 gelöst und wird das die Stirnplatte 3 umfassende Bauteil 1a von den Führungsstangen 6, 7 abgezogen, so daß die Einspannstelle für die Frässcheibe 35 frei zugänglich wird. Der Schlitten 5, der Winkelschleifer 18 und ggfs. der Spänebeutel 47 verbleiben dabei am anderen Bauteil 1b.

Der Rückensteg 4 ist von einer Rändelkopfschraube 48 lose durchsetzt, welche mehr oder weniger weit in ein schlittenseitiges Gewindestück 5a einschraubbar ist und somit den maximalen Vorschub des Schlittens 5 als Anschlag begrenzt. Auf dem Schaft der Rändelkopfschraube 48 ist ferner eine Rändelmutter 49 geführt, die zwischen der Rückseite des Schlittens 5 und dem Boden 50 einer am Rückensteg 4 angeordneten Ausnehmung 51 angeordnet ist und die einen Feinvorschub des Schlittens 5 ermöglicht. Von der Stirnplatte 3 ragen rückwärtig zwei stiftförmige Zeiger 52, 53 ab, denen an der Oberseite des Schlittens 5 Skalen 54 zur Anzeige des jeweiligen Schlittenvorschubes zugeordnet sind.

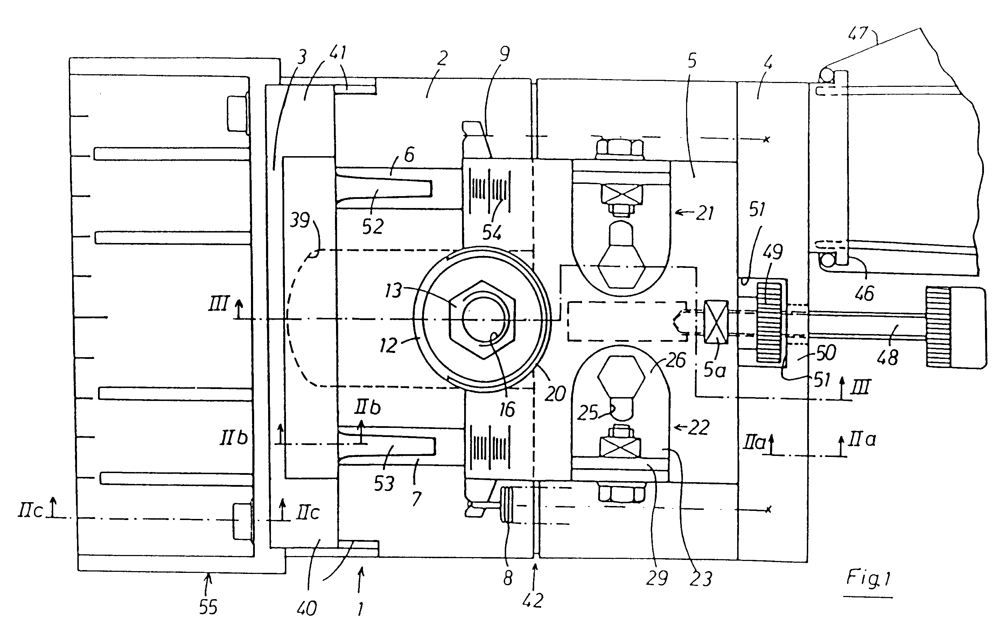

In den Fig. 1 und 2 ist ferner noch ein an die Stirnplatte 3 in verschiedenen Höhenlagen anschraubbarer Werkstückauflagewinkel 55 gezeigt. Wie Fig. 4 zeigt, sind an jeder Seite der Stirnplatte 3 jeweils drei Befestigungslöcher 56, 57, 58 zum Anschrauben des Werkstückauflagewinkels 55 vorgesehen.

Ferner sind der Fräsvorrichtung noch zwei in Fig. 2 gezeigte, kufenförmige Distanzstücke 59, 60 zugeordnet, die an die Unterseite der Grundplatte 2 anschraubbar oder anklemmbar sind und sich über die volle Breite der Grundplatte 2 erstrecken. Diese Distanzstücke 59, 60 werden vornehmlich beim Schattenfugenfräsen eingesetzt.

## Patentansprüche

1. Vorrichtung zum Fräsen von Nuten oder Schattenfugen, mit einem eine Grundplatte (2) und eine Stirnplatte (3) aufweisenden Anschlagwinkel (1) und mit einem Schlitten (5), der auf am Anschlagwinkel vorgesehenen Führungen (6, 7) parallel zur Grundplatte (2) gegen die Kraft von Rückstellfedern (8, 9) in Richtung auf die Stirnplatte (3) verschiebbar ist, wobei der Schlitten (5) als Träger für einen, ein Winkelgetriebe aufweisenden Antriebsmotor und für eine Frässcheibe (35) ausgebildet ist, welcher eine schlitzförmige Durchtrittsöffnung (38) in der Stirnplatte (3) zugeordnet ist, dadurch gekennzeichnet, daß die Vorrichtung als ein gegen die angeschraubten Führungshandgriffe und das Schleifwerkzeug eines handgeführten Winkelschleifers austauschbares Vorsatzgerät ausgebildet ist, daß der Schlitten (5) zwei mehrgliedrige Befestigungswinkel (21, 22) aufweist, zwischen denen der Winkelschleifer (18) mittels in die Einschraublöcher (33) für die Führungshandgriffe eingreifenden Befestigungsschrauben (32) festspannbar ist, und daß im Schlitten (5) eine Kupplungswelle (13) gelagert ist, in deren oberes, eine Gewindebohrung (16) aufweisendes Ende der Abtriebs-Gewindezapfen (17) des Winkelschleifers (18) und an deren unteres Ende die Frässcheibe (35) anschraubbar sind.

2. Vorrichtung nach Anspruch 1, dadurch gekennzeichnet, daß die Kupplungswelle (13) in schlittenseitigen Kugellagern (14) gelagert ist.

3. Vorrichtung nach Anspruch 1 oder 2, dadurch gekennzeichnet, daß der Schlitten (5) aus einer auf zwei Führungsstangen (6, 7) geführten Platte besteht, über deren Oberseite das die Gewindebohrung (16) für den Winkelschleifer-Abtriebszapfen (17) aufweisende Ende (15) der Kupplungswelle (13) vorsteht, welches mit einem Mehrkantaußenprofil zum Ansetzen eines Schraubenschlüssels versehen ist.

4. Vorrichtung nach Anspruch 3, dadurch gekennzeichnet, daß das vorstehende Ende (15) der Kupplungswelle (13) zum größten Teil von einem am Schlitten (5) angebrachten Schutzring (20) umschlossen ist.

5. Vorrichtung nach einem der Ansprüche 1 bis 4, dadurch gekennzeichnet, daß der Kupplungswelle (13) eine in ihre obere Gewindebohrung (16) einschraubbare Reduzierbuchse (19) zur Anpassung an den Durchmesser des Abtriebszapfens (17) des jeweiligen Winkelschleifers (18) zugeordnet ist.

6. Vorrichtung nach einem der Ansprüche 1 bis 5, dadurch gekennzeichnet, daß die Kupplungswelle (13) an ihrem unteren Ende einen Aufnahmering (36) für die Frässcheibe (35) trägt, zwischen dem und einer Einspannscheibe (37) die Frässcheibe (35) mittels einer in eine untere Gewindebohrung (33) der Kupplungswelle (13) eingreifenden Senkkopfschraube (34) festspannbar ist.

7. Vorrichtung nach Anspruch 1, dadurch gekennzeichnet, daß die Befestigungswinkel (21, 22) jeweils aus einem unteren Winkelteil (23), das mit seinem bodenseitigen, ein Langloch (25) aufweisenden Schenkel (26) an dem Schlitten (5) unter Anpassung an den Abstand und die Achsrichtung der Handgriff-Einschraublöcher (33) anschraubbar ist, und aus einer Lasche (24) bestehen, welche an ihrem unteren Ende unter Schwenkausrichtung am oberen Schenkel (29) des zugehörigen Winkelteiles (23) festschraubbar sind und im oberen Bereich jeweils ein Langloch (31) für die Befestigungsschrauben (32) aufweisen.

8. Vorrichtung nach einem der Ansprüche 1 bis 7, dadurch gekennzeichnet, daß die Grundplatte (2) an der der Stirnplatte (3) abgewandten Seite einen Rückensteg (4) aufweist, daß die Führungsstangen (6, 7) im Rückensteg und in der Stirnplatte abgestützt sind, daß die Grundplatte (2) eine bis in die Stirnplatte (3) reichende Längsausnehmung (39) zur Aufnahme der Kupplungswelle (13) aufweist und daß der Anschlagwinkel (1) angrenzend an die Längsausnehmung (39) in zwei aneinander steckbare Bauteile (1a, 1b) unterteilt ist, von denen zumindest das die Stirnplatte (3) umfassende Bauteil (1a) betriebsmäßig von den Führungsstangen (6, 7) abziehbar ist.

9. Vorrichtung nach Anspruch 8, dadurch gekennzeichnet, daß das die Stirnplatte (3) umfassende Bauteil (1a) mittels in endseitige Gewindebohrungen der Führungsstangen (6, 7) eingreifender versenkter Kopfschrauben (10, 11) am anderen Bauteil (1b) festspannbar ist.

10. Vorrichtung nach Anspruch 8 oder 9, dadurch gekennzeichnet, daß die Grundplattenhälften (2a, 2b) jeweils eine Aufnahmetasche (43, 44) für die Frässcheibe (35) aufweisen, wobei die Aufnahmetasche (44) des hinteren Bauteils (1b) in einen Späneauswurfkanal (45) übergeht, der in einem rückwärtigen Anklemmflansch (46) mündet, an dem ein Späneauffangbeutel (47) befestigbar ist.

11. Vorrichtung nach einem der Ansprüche 1 bis 10, gekennzeichnet durch eine den Rückensteg (4) durchsetzende, in den Schlitten (5) eingeschraubte Rändelkopfschraube (48) als Anschlagbegrenzung für die Frästiefe.

12. Vorrichtung nach Anspruch 11, gekennzeichnet durch eine auf der Rändelkopfschraube (48) geführte, zwischen dem Rückensteg (4) und dem Schlitten (5) angeordnete Rändelmutter (49) als Feinvorschub.

13. Vorrichtung nach Anspruch 1, gekennzeichnet durch einen an die Stirnplatte (3) in verschiedenen Höhenlagen anschraubbaren Werkstückauflagewinkel (55).

14. Vorrichtung nach Anspruch 1, gekennzeichnet durch an die Unterseite der Grundplatte (2) ansteckbare oder anschraubbare, kufenförmige Distanzstücke (59, 60) zum Schattenfugenfräsen.

## Claims

1. Apparatus for milling grooves or dummy joints, with a back-square* (1) displaying a base-plate (2) and a facing-plate (3) and with a slide (5), which can be pushed along guides (6,7) on the back-square parallel to the base-plate (2) and against the force of pull-back springs (8,9) in the direction of the facing-plate (3), wherein the slide (5) is designed as a carrier for an operating-motor with an angular gear and for a milling wheel (35), for which a slot-shaped opening (38) is provided in the facing plate (3), characterized in that the apparatus is designed as an attachment which is interchangeable with the screwed-on guide-handles and the grinding-tool of a manually operated angle-grinder, in that the slide (5) has two multi-section clip-angles (21,22) between which the angle-grinder (18) may be clamped via fastening screws (32) engaging in the screw-holes (33) for the guide-handles, and in that in the slide (5) a coupling shaft (13) is supported, into whose upper end, displaying a threaded boring (16), the power-take-off threaded stem (17) of the angle-grinder (18) may be screwed, and onto whose lower end the milling wheel (35), may be screwed.

2. Apparatus as claimed in Claim 1, characterized in that the coupling shaft (13) is borne upon ball-bearings (14) at the side of the slide.

3. Apparatus as claimed in Claims 1 or 2, characterized in that the slide (5) consists of a plate guided along two guide rods (6,7), over whose upper side the end (15) of the coupling shaft (13) displaying the threaded bore (16) for the power-take-off stem (17) projects, the end being equipped with a polygonal exterior profile upon which to set a spanner.

4. Apparatus as claimed in Claim 3, characterized in that the projecting end (15) of the coupling shaft (13) is largely surrounded by a protective ring (20) attached to the slide (5).

5. Apparatus as claimed in one of Claims 1 to 4, characterized in that the coupling shaft (13) is provided with a reduction-bush (19), which may be screwed into its upper threaded boring (16), for adjustment to the diameter of the power-take-off stem (17) of the relevant angle-grinder (18).

6. Apparatus as claimed in one of Claims 1 to 5, characterized in that the coupling shaft (13) carries on its lower end a reception ring (36) for the milling wheel (35) between which ring and a clamping washer (37) the milling wheel (35) may be fixed via a sunken head screw (34) engaging in a lower threaded boring (33) in the coupling shaft (13).

7. Apparatus as claimed in Claim 1, characterized in that the clip angles (21,22) each consist of a lower angle unit (23), whose floor-side shank (26) displaying a linear hole (25) may be screwed to the slide (5), adjusting to the distance between and the axis alignment of the handle-screw-holes (33), and of a tab (24), each of which at their lower end after rotary alignment may be screwed tight to the upper shank (29) of the relevant angle unit (23) and display in their upper area a longitudinal hole (31) for the fastening screws (32).

8. Apparatus as claimed in one of Claims 1 to 7, characterized in that the base plate (2) has a rear bridge (4) on the opposite side from the facing plate (3), in that the guide rods (6,7) are supported in the rear bridge and in the facing plate, in that the base plate (2) has a linear recess (39) extending into the facing plate (3) to receive the coupling shaft (13) and in that the back-square (1) is divided, in the area bordering the linear recess (39), into two components (1a,1b) which can be plugged into one another, of which at least the component (1a) encompassing the facing plate (3) may be withdrawn, operationally, from the guide rods (6,7).

9. Apparatus as claimed in Claim 8, characterized in that the component (1a) encompassing the facing plate (3) may be fixed via sunken head screws (10,11) engaging in terminal threaded borings in the guide rods (6,7) to the other component (1b).

10. Apparatus as claimed in Claims 8 or 9, characterized in that the halves (2a,2b) of the base plate each display a reception pocket (43,44), for the milling wheel (35), the reception pocket (44) of the rear component (1b) running into a splinter-ejection-channel (45), which opens into a rearward-facing pinching-flange (46), to which a splinter collection bag (47) may be fastened.

11. Apparatus as claimed in one of Claims 1 to 10, characterised by a knurled head-screw (48) transecting the rear bridge (4) and screwed into the slide (5) to form a stop limiting the milling depth.

12. Apparatus as claimed in Claim 11, characterized by a knurled nut (49) applied to the knurled head screw (48) and located between the rear bridge (4) and the slide (5) as a fine feed.

13. Apparatus as claimed in Claim 1, characterised by a tool-support square (55) which may be screwed at various heights on to the facing plate (3).

14. Apparatus as claimed in Claim 1, characterised by receptacle shaped spacer blocks (59,60), which may be plugged or screwed onto the underside of the base plate (2) for milling dummy joints.

## Revendications

1. Dispositif de fraisage de rainures ou de joints bouvetés, comportant une cornière de butée (1), présentant une plaque de base (2) et une plaque frontale (3), et avec un chariot (5), déplaçable parallèlement à la plaque de base (2), en direction de la plaque frontale (3), sur des guidages (6, 7) prévus sur la cornière de butée, à l'encontre de la force de ressorts de rappel (8, 9), le chariot (5) étant réalisé sous forme de support pour un moteur d'entraînement à transmission de renvoi d'angle et pour une fraise disque (35), à laquelle est associée une ouverture de passage (38) en forme de fente, ménagée dans la plaque frontale (3), caractérisé en ce que le dispositif est réalisé sous forme d'appareil additionnel, pouvant être échangé contre les poignées de guidage vissées et l'outil de meulage d'une meuleuse d'angle guidée à la main, en ce que le chariot (5) présente deux cornières de fixation (21, 22) à deux éléments, entre lesquels la meuleuse d'angle (18) peut être serrée au moyen de vis de fixation (32) s'engageant dans les trous de vissage (33) prévus pour les poignées de guidage, et en ce que dans le chariot (5) est monté un arbre de couplage (13), dans l'extrémité supérieure, présentant un trou taraudé (16), duquel le tourillon fileté mené (17) de la meuleuse d'angle (18) peut être vissée et à l'extrémité inférieure duquel la fraise disque (35) peut être vissée.

2. Dispositif selon la revendication 1, caractérisé en ce que l'arbre de couplage (13) tourillonne dans des roulements à billes (14) montés côté chariot.

3. Dispositif selon la revendication 1 ou 2, caractérisé en ce que le chariot (5) est composé d'une plaque guidée sur deux barres de guidage (6, 7), sur la face supérieure de laquelle l'extrémité (15), présentant le trou taraudé (16) prévu pour le tourillon d'entraînement (17) de la meuleuse d'angle, de l'arbre de couplage (13) fait saillie, en étant pourvu d'un profil extérieur polygonal pour l'application d'une clé à visser.

4. Dispositif selon la revendication 3, caractérisé en ce que l'extrémité (15) en saillie de l'arbre de couplage (13)-est entourée pou la plus grande partie d'une bague de protection (20) montée sur le chariot (5).

5. Dispositif selon l'une des revendications 1 à 4, caractérisé en ce qu'à l'arbre de couplage (13) est associée une douille de réduction (19), pouvant être vissée dans son trou taraudé (16) supérieur, en vue de l'adaptation au diamètre du tourillon d'entraînement (17) de la meuleuse d'angle (18) respective.

6. Dispositif selon l'une des revendications 1 à 5, caractérisé en ce que l'arbre de couplage (13) porte, à son extrémité inférieure, une bague de prise (36), destinée à la fraise disque (35) et entre laquelle et une rondelle de serrage (37) la fraise disque (35) est susceptible d'être serrée au moyen d'une vis à tête noyée (34), s'engageant dans un trou taraudé (33) inférieur de l'arbre de couplage (13).

7. Dispositif selon la revendication 1, caractérisé en ce que chaque cornière de fixation (21, 22) est composée d'une partie de cornière inférieure (23), pouvant être vissée, par sa branche (26) située côté fond et présentant un trou allongé (25), sur le chariot (5), avec adaptation à l'entraxe et à la direction des axes de trous de vissage de poignée (33), et composée d'une patte (24), pouvant être vissée à son extrémité inférieure, selon une orientation pivotée, sur la branche supérieure (29) de la partie de cornière (23) afférente, et présentant dans la zone supérieure un trou allongé (31), pour chacune des vis de fixation (32).

8. Dispositif selon l'une des revendications 1 à 5, caractérisé en ce que la plaque de base (2) présente sur la face opposée à la plaque frontale (3) une nervure dorsale (4), en ce que les barres de guidage (6, 7) sont soutenues dans la nervure dorsale et dans la plaque frontale, en ce que la plaque de base (2) présente un évidement longitudinal (39), allant jusque dans la plaque frontale (3), en vue de recevoir l'arbre de couplage (13) et en ce que la corniére de butée (1) est voisin de évidement longitudinal (39) subdivisée en deux éléments de construction (1a, 1b) pouvant être enfichés l'un dans l'autre, dont au moins l'élément de construction (1a) enchâssant la plaque frontale (3) peut être extrait des barres de guidage (6, 7), selon le foncionnement.

9. Dispositif selon la revendication 8, caractérisé en ce que l'élément de construction (1a) enchâssant la plaque frontale (3) peut être bloqué par vissage sur l(autre élément de construction (1b), au moyen de vis à têtes noyées (10, 11), s'engageant dans des taraudages d'extrémité des barres de guidage (6, 7).

10. Dispositif selon la revendication 8 ou 9, caractérisé en ce que les moitiés de plaque de base (2a, 2b) présentent chacune une poche de réception (43, 44) pour la fraise disque (35), la poche de réception (44) de l'élément de construction arrière (1b) se transformant en un canal d'éjection de copeaux (45), débouchant dans une bride de serrage (46) dorsale, sur laquelle un sachet de captage de copeaux (47) peut être fixé.

11. Dispositif selon l'une des revendications 1 à 10, caractérisé par une vis à tête moletée (48), traversant la nervure dorsale (4), vissée dans le chariot (5), servant de limitation de butée pour la profondeur de fraisage.

12. Dispositif selon la revendication 11, caractérisé par un écrou moleté (49), guidé sur la vis à tête moletée (48), disposé entre la nervure dorsale (4) et le chariot (5), servant à l'avance lente.

13. Dispositif selon la revendication 1, caractérisé par une corniére (55) de pose de pièce à usiner, pouvant être vissée sur la plaque frontale (3) à différents niveaux en hauteur.

14. Dispositif selon la revendication 1, caractérisé par des pièces d'écartement (59, 60) en forme de coussins, pouvant être enfichées ou vissées sur la face inférieure de la plaque de base (2).
